# EUROPEAN PATENT SPECIFICATION

(11) **EP 1 083 499 B1**
(45) Date of publication and mention of the grant of the patent: **13.05.2009**
(21) Application number: 00105096.2
(22) Date of filing: 10.03.2000
(51) Int. Cl.: G06F 17/50

(54) **Method for thermal fluid analysis and thermal stress analysis of fluid machine**
Verfahren zur Analyse der Wärmetransportflüssigkeit und der thermischen Spannung einer Fluidmaschine
Méthode pour l'analyse de fluide thermique et de la contrainte thermique d'une machine à fluide

(30) Priority: 10.09.1999 JP 25767199
(43) Date of publication of application: 14.03.2001
(73) Proprietor: IHI Corporation, Tokyo 135-8710 (JP)
(72) Inventor: Obi, Mikio, Urayasu-shi, Chiba (JP); Matsuura, Natsuko, Omiya-shi, Saitama (JP); Takei, Nobou, Urayasu-shi, Chiba (JP)
(74) Representative: Grünecker, Kinkeldey, Stockmair & Schwanhäusser Anwaltssozietät

(56) References cited:
- US-A- 5 202 843
- US-A- 5 644 687
- US-A- 5 729 670
- "Current Mechanical Design and Analysis Processes at LaRC" INTERNET ARTICLE, [Online] INTERNET Retrieved from the Internet: URL:http://web.archive.org/web/19990203230 457/http://amsd-www.larc.nasa.gov/amsd/ref s/des_analysis.html> [retrieved on 2004-10-21]

## Description

### Field of the Invention

The present invention relates to a method for analyzing, in a short time with a high precision, both of thermal fluid analysis and thermal stress analysis of fluid machines.

### Description of the Related Art

A turbocharger or a turbo-compressor is a fluid machine which has a complicated three-dimensional shape including a large number of free form surfaces and including a large number of machine elements. It is also exposed to a severe environment in which high-speed rotation is required at a high temperature. Therefore, both of the analysis of a thermal fluid flowing through the fluid machine and the analysis of a structure constituting the turbocharger are indispensable to the research and development of the turbocharger or the like.

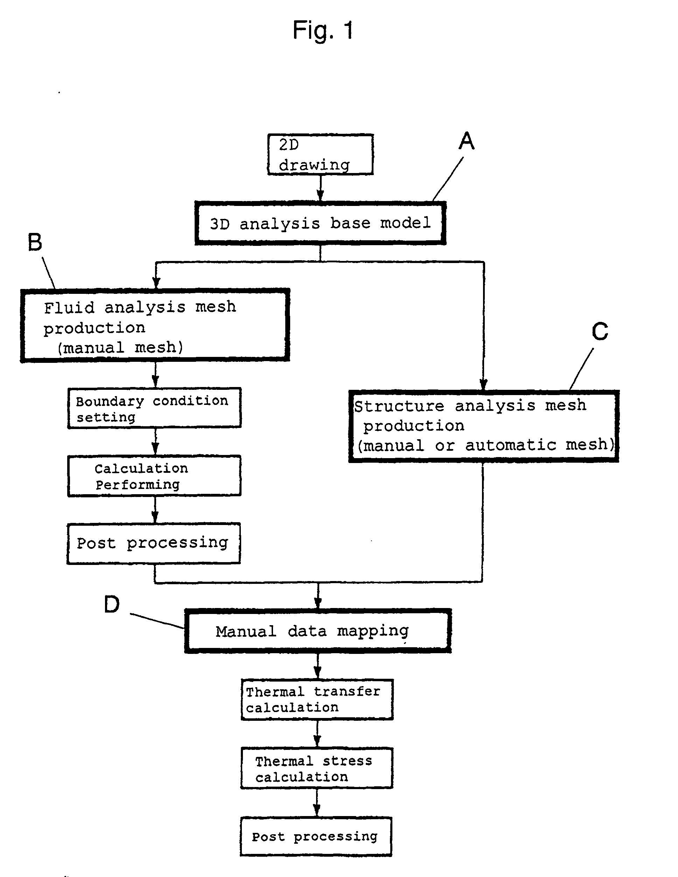

Fig. 1 is a flowchart schematically showing a conventional analysis method. As shown in Fig. 1, the conventional analysis method comprises first obtaining a temperature distribution from the thermal fluid analysis, and then performing the thermal conduction analysis and the thermal stress analysis of a solid section.

In the conventional analysis method shown in Fig. 1, since article production (turbocharger manufacture) proceeds based on two-dimensional drawing, the analysis itself is carried out independently of this manufacture process. Therefore, the conventional analysis method has a problem that much time is required for analysis in steps A, B, C, D shown by bold-line frames in Fig. 1. This problem will further be described in detail hereinafter.
(1) Preparation of Three-dimensional Model (Step A)
   Since the conventional development is performed in two dimensions, a three-dimensional model for analysis is prepared after the completion of the drawing. Therefore, in the modeling of the part which cannot be represented by the two-dimensional drawing, designers and model makers have to exchange communications, and it sometimes takes a great deal of time to prepare the model.
(2) Mesh production (Steps B, C)
   Since a mesh to be prepared for fluid analysis is finer than that for structure analysis, and is usually a hexahedron, the mesh needs to be manually prepared, which requires time and labor. Moreover, in the preparation of the mesh for structure analysis, coarse division may be performed, but the matching with the mesh for fluid analysis needs to be considered, and the mesh needs to also be manually prepared.
(3) Mapping of Temperature Data (Step D)

In the conventional analysis flow, since the thermal fluid analysis and the Thermal transfer analysis are independent of each other, calculation has to be performed by placing insulation or a certain tentative value between solid and fluid. Moreover, a heat conductivity and wall surface temperature obtained from the thermal fluid analysis need to be manually mapped to the mesh for structure analysis (an operation of setting the heat conductivity and wall surface temperature of each part). Furthermore, in this mapping, since the number of meshes differs largely between the fluid analysis and the structure analysis, and further the number is enormous. Therefore it is very difficult to accurately perform the manual mapping. For example, in the example described later, the number of meshes for the fluid analysis is about 690,000, and the number of meshes for the structure analysis is about 80,000.

Therefore, for the data of the heat conductivity and wall surface temperature obtained from the thermal fluid analysis, each range of close values is formed into a large group, a representative value is set, and the value is manually mapped to the other side (for the structure analysis). Consequently, in this analysis method, there are problems that the analysis requires much time, and that calculation precision is deteriorated.

As described above, in the conventional analysis method, interface parts connecting analysis steps need to be manually operated, and as a result, it takes a long period of about several months (e.g., three months) to analyze one model.

A method for thermal fluid analysis and thermal stress analysis of a fluid machine is disclosed on" Recent Advances in Thermal/Flow Simulation:Integrating Thermal Analysis into the Mechanical Design Process" Free et al 7-9.02.1995

### SUMMARY OF THE INVENTION

The present invention has been developed to solve these problems. Specifically, an object of the present invention is to provide an analysis method for thermal fluid analysis and thermal stress analysis of a turbocharger requiring both of the thermal fluid analysis and the thermal stress analysis can be performed in a short time with a high precision by remarkably reducing or eliminating interface parts dependent on manual operations.

According to the present invention, there is provided an analysis method for thermal fluid analysis and thermal stress analysis of a turbocharger as defined in claim 1.

According to the above-described method of the present invention, since the fluid analysis mesh and structure analysis mesh are automatically prepared in parallel, the mesh production by the manual operation can be eliminated. Moreover, since the results of the thermal fluid analysis based on the fluid analysis mesh are subjected to the automatic data mapping to the structure analysis mesh, the conventional manual mapping for the structure analysis can be eliminated. Therefore, the interface parts by the manual operations can substantially be eliminated so that the fluid machine analysis can be performed in a short time with a high precision.

According to a preferred mode for carrying out the present invention, the automatic data mapping comprises performing interpolation between the fluid analysis mesh and the structure analysis mesh different from each other in the number meshes based on the data obtained in the thermal fluid analysis and preparing the data of the heat conductivity and wall surface temperature for the structure analysis mesh.

According to the method, the heat conductivity and wall surface temperature obtained from the thermal fluid analysis can automatically be mapped to the structure analysis mesh.

Moreover, the fluid analysis mesh and structure analysis mesh are prepared by automatic tetra-mesh division for division to tetrahedron cells. Furthermore, the automatic tetra-mesh division may be dependent on an automatic lattice generation algorithm of any one of an oct-tree technique, a Delaunay triangulation technique, and an advancing-front technique.

According to this method, the automatic division which cannot be realized in the conventional division to hexahedron cells can be realized by the division to the tetrahedron cells.

Other objects and advantageous characteristics of the present invention will be apparent from the following description with reference to the accompanying drawings.

### BRIEF DESCRIPTION OF THE DRAWINGS

Fig. 1 is a flowchart of a conventional analysis method for thermal fluid analysis and thermal stress analysis.
Fig. 2 is a flowchart of an analysis method for thermal fluid analysis and thermal stress analysis of a fluid machine according to the present invention.
Fig. 3 is a shape model diagram of an analysis model.
Fig. 4 is a diagram showing the example of a fluid analysis mesh.
Fig. 5 is a diagram showing the example of a structure analysis mesh.
Fig. 6 shows the example of a temperature distribution calculation result.
Fig. 7 is a diagram showing the automatic mapping example of temperature data.
Fig. 8 is a diagram showing a thermal stress calculation result.

### DETAILED DESCRIPTION OF THE PREFERRED EMBODIMENTS

Preferred embodiments of the present invention will be described hereinafter with reference to the drawings.

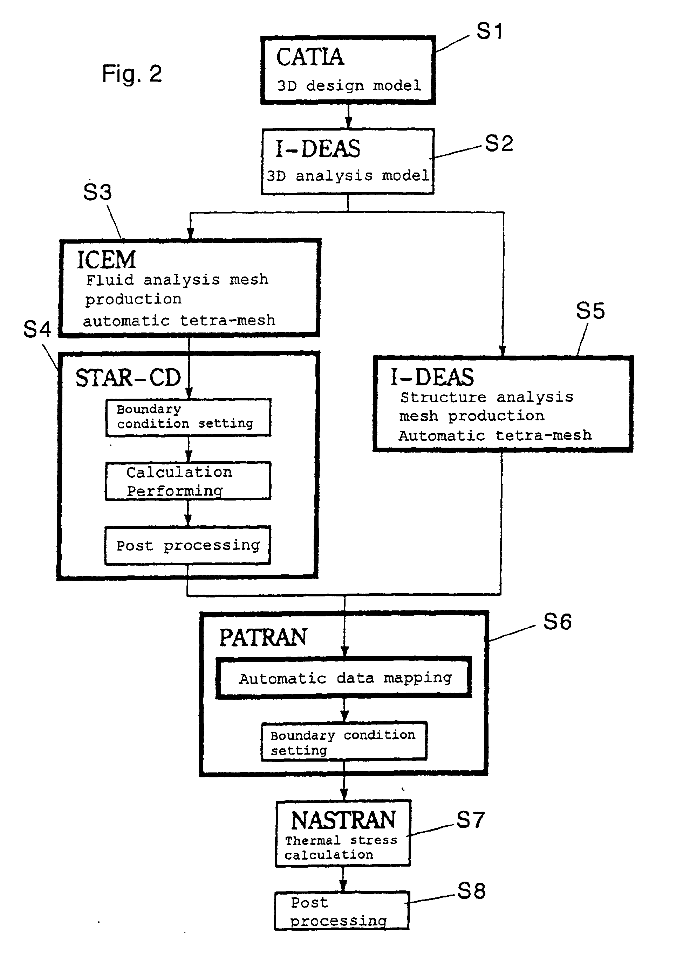

Fig. 2 is a flowchart of an analysis method for thermal fluid analysis and thermal stress analysis of a turbocharger according to the present invention. In the present invention, since the analysis method is incorporated in a development process on the basis of three-dimensional model data, the method flows on the assumption that a three-dimensional design model is already prepared in the development process. Moreover, the processing is automated using interface tools which connect several processings.

As shown in Fig. 2, the analysis method of the present invention is roughly classified into eight steps S1 to S8. In step S1, the 3D design model is prepared, for example, using CATIA. In step S2, a 3D analysis model is prepared, for example, using I-DEAS. In step S3, a fluid analysis mesh is automatically prepared as a tetra-mesh, for example, using ICEM. Step S4 is constituted of boundary condition setting, calculating and post processing, and, for example, STAR-CD is used to perform thermal fluid analysis. In step S5, a structure analysis mesh is automatically prepared as the tetra-mesh, for example, using I-DEAS. In step S6, for example, PATRAN is used to perform automatic data mapping, and subsequently boundary conditions are set. In step S7, for example, NASTRAN is used to calculate thermal stress. In step S8, the post processing is performed.

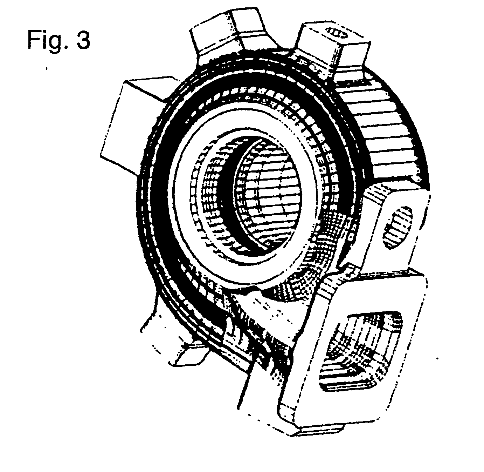

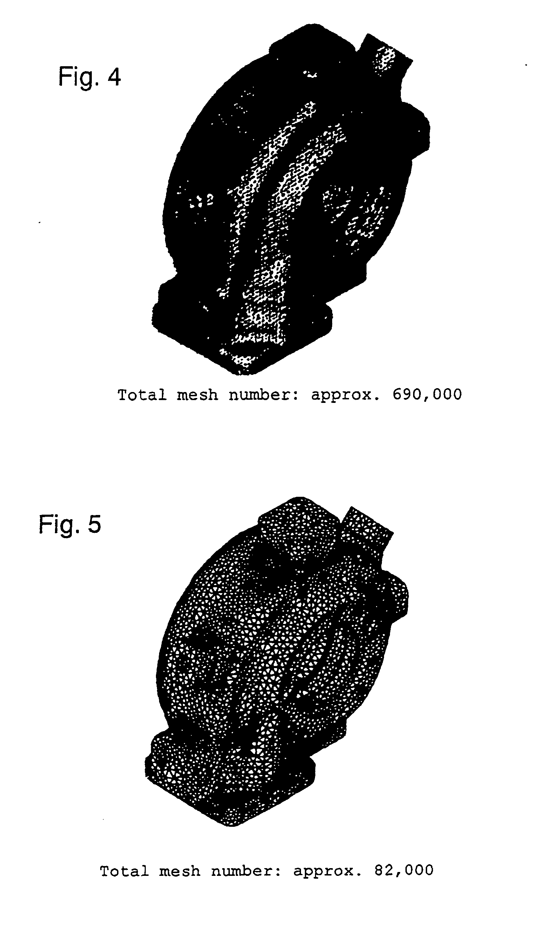

Additionally, the above-described CATIA, I-DEAS, ICEM, STAR-CD, PATRAN and NASTRAN are existing finite element process general-purpose software. Comparison with the conventional analysis method will be described hereinafter.
(1) Three-dimensional Model Preparation (steps S1, S2)
   In the development process mainly on the basis of the three-dimensional model data, the designers themselves prepare the three-dimensional model in their design operations. Therefore, as compared with the conventional method in which the model is newly prepared from the two-dimensional drawing, in the method of the present invention, remarkable speedup is enabled. Moreover, the mismatching of the model because of the misunderstanding of the designers and analyzers can be avoided. Fig. 3 shows the example of a model forming a basis of analysis.
(2) Mesh production (Steps S3, S5)
   In the method of the present invention, since both the fluid analysis and the structure analysis use an automatic tetra-mesh, the operation time can remarkably be shortened. Specifically, the fluid analysis mesh and structure analysis mesh are prepared by automatic tetra-mesh division for the division to tetrahedron cells. This automatic tetra-mesh division may be dependent on the automatic lattice generation algorithm of any one of the oct-tree technique, the Delaunay triangulation technique, and the advancing-front technique. In the conventional method the division to the hexahedron cells is manually performed, but the mesh production can automatically be performed by the division to the tetrahedron cells. Fig 4 shows the example of the fluid analysis mesh, and Fig. 5 shows the example of the structure analysis mesh.
(3) Mapping of Temperature Data (Steps S4, S6)

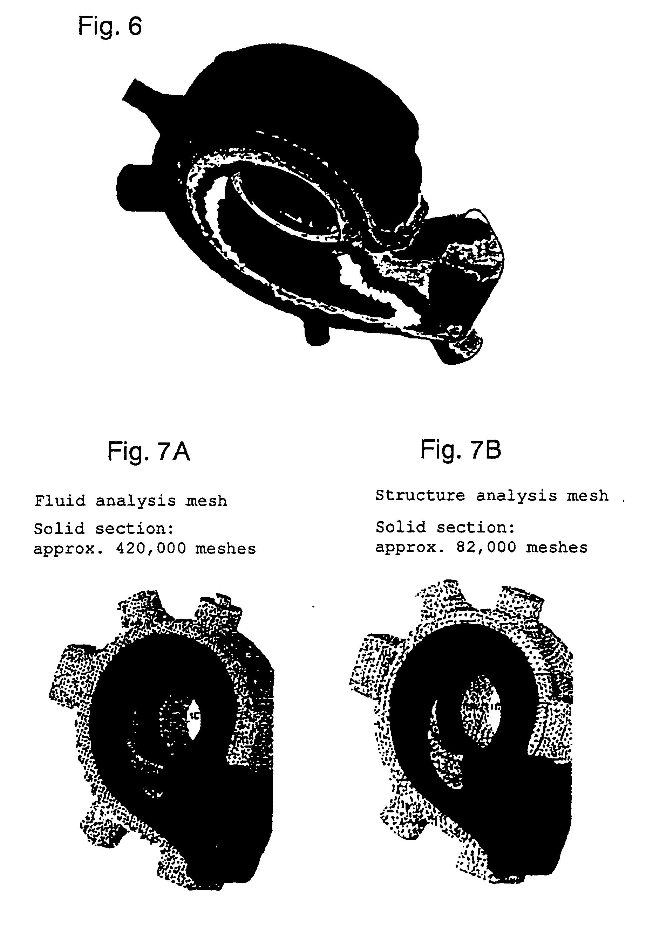

   Fig. 6 shows temperature distribution data of a solid section as a result of thermal fluid analysis. Additionally, the gradation in Fig. 6 is obtained by dividing the temperature distribution by color, but detailed description is omitted here. In this example a cooling water passage is disposed around a high-temperature gas passage, and heat comes in and out through the solid section. Therefore, the Thermal transfer of the solid section was also calculated on the thermal fluid analysis side. The result was mapped to the structure analysis mesh from the fluid analysis mesh by automatic data mapping through a structure analyzing preprocessor.

Figs. 7A, 7B show the temperature data on the fluid analysis mesh before the mapping, and the temperature data on the structure analysis mesh after the mapping. Fig. 7A shows the temperature data on the fluid analysis mesh (about 420,000 meshes), and Fig. 7B shows the temperature data on the structure analysis mesh (about 82,000 meshes). The automatic data mapping is used to perform the interpolation between the meshes different in number while the data is exchanged, so that a sufficient precision can be obtained. In this example, the mapping was completed in about seven hours. Since the conventional manual mapping requires about three months, as compared with this, great effects can be obtained in both the remarkable time reduction and the enhancement of precision.

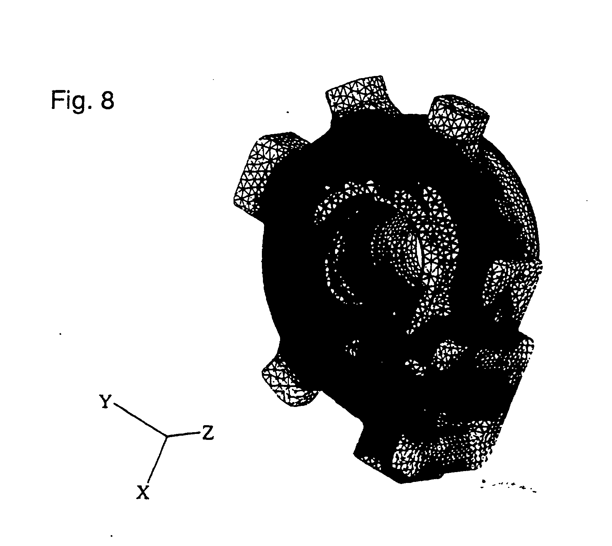

Fig. 8 shows the example of finally obtained thermal stress analysis result. Additionally, the concentration in the drawing results from the division of the thermal stress distribution by color, but the detailed description is omitted here.

As described above, according to the method of the present invention, since the fluid analysis mesh and structure analysis mesh are automatically prepared in parallel, the mesh production by manual operation can be eliminated. Moreover, the thermal fluid analysis result based on the fluid analysis mesh is subjected to the automatic data mapping for the structure analysis mesh, the conventional manual mapping to the structure analysis can be eliminated. Therefore, the analysis of the fluid machine can be performed in a short time with a high precision by substantially eliminating the interface part by the manual operation.

Moreover, in the automatic data mapping, the interpolation is performed between the fluid analysis mesh and the structure analysis mesh different in the number of meshes based on the data obtained by the thermal fluid analysis to prepare the data of the heat conductivity and wall surface temperature adapted for the structure analysis mesh, so that the heat conductivity and wall surface temperature obtained from the thermal fluid analysis can automatically be mapped to the structure analysis mesh.

Furthermore, for the preparation of the fluid analysis mesh and structure analysis mesh, according to the method of the automatic tetra-mesh division for the division to the tetrahedron cells, the automatic division which has not been realized in the conventional division to the hexahedron cells can be realized by the division to the tetrahedron cells.

As described above, the analysis method for the thermal fluid analysis and the thermal stress analysis of a turbocharger according to the present invention provides an excellent effect that the analysis of the turbocharger requiring both the thermal fluid analysis and the thermal stress analysis can be performed in a short time with a high precision by remarkably reducing or eliminating the interface parts by the manual operations.

## Claims

1. An analysis method for thermal fluid analysis and thermal stress analysis of a turbocharger which comprises the steps of
automatically preparing a fluid analysis mesh (S3) and a structure analysis mesh (S5) different from each other in the number of meshes from a three-dimensional model (S1, S2) of the turbocharger;
performing the thermal fluid analysis(S4) based on the fluid analysis mesh;
subjecting the results obtained by the thermal fluid analysis to automatic data mapping (S6) in compliance with the structure analysis mesh; and
then calculating thermal stress (S7) based on the structure analysis mesh,
wherein
preparing the fluid analysis mesh (S3) and the structure analysis mesh (S5) is performed in parallel,
the automatic data mapping (S6) is performed by interpolating between the fluid analysis mesh and the structure analysis mesh,
the method further comprises the step of simultaneously preparing data of heat conductivity and wall surface temperature adapted for the structure analysis mesh,
said fluid analysis mesh and said structure analysis mesh are prepared by automatic tetra-mesh division for division to tetrahedron cells, and
said automatic tetra-mesh division is performed by an automatic lattice generation algorithm of any one of an oct-tree technique, a Delaunay triangulation technique and an advancing-front technique.

## Patentansprüche

1. Analyseverfahren für Wärmefluid-Analyse und Wärmebelastungs-Analyse eines Turboladers, das die folgenden Schritte umfasst:
automatisches Erstellen eines Fluidanalyse-Netzes (S3) und eines Strukturanalyse-Netzes (S5), die sich voneinander hinsichtlich der Anzahl von Netzen unterscheiden, aus einem dreidimensionalen Modell (S1, S2) des Turboladers;
Durchführen der Wärmefluid-Analyse (S4) auf Basis des Fluidanalyse-Netzes;
Durchführen von automatischer Datenzuordnung (S6) der mit der Wärmefluid-Analyse erzielten Ergebnisse entsprechend dem Strukturanalyse-Netz; und
anschließend Berechnen von Wärmebelastung (S7) auf Basis des Strukturanalyse-Netzes,
wobei
Erstellen des Fluidanalyse-Netzes (S3) und des Strukturanalyse-Netzes (S5) parallel durchgeführt werden,
die automatische Datenzuordnung (S6) durch Interpolieren zwischen dem Fluidanalyse-Netz und dem Strukturanalyse-Netz durchgeführt wird,
das Verfahren des Weiteren den Schritt des simultanen Erstellens von Daten der Wärmeleitfähigkeit und der Wandflächentemperatur umfasst, die für das Strukturanalyse-Netz eingerichtet sind,
das Fluidanalyse-Netz und das Strukturanalyse-Netz durch automatische Tetra-Netzunterteilung zur Unterteilung in Tetraederzellen erstellt werden, und
die automatische Tetra-Netzunterteilung durch einen automatischen Gittererzeugungsalgorithmus nach einer Oct-Tree-Methode, einer Delaunay-Triangulations-Methode oder einer Advancing-Front-Methode durchgeführt wird.

## Revendications

1. Procédé d'analyse pour une analyse de fluide thermique et une analyse des contraintes thermiques d'un turbocompresseur, qui comprend les étapes de
préparer automatiquement un maillage d'analyse de fluide (S3) et un maillage d'analyse de structure (S5) différents l'un de l'autre quant au nombre de mailles à partir d'un modèle tridimensionnel (S1, S2) du turbocompresseur ;
réaliser l'analyse de fluide thermique (S4) sur la base du maillage d'analyse de fluide ;
soumettre les résultats obtenus par l'analyse de fluide thermique à un mappage de données automatique (S6) conformément au maillage d'analyse de structure ; et
calculer ensuite les contraintes thermiques (S7) sur la base du maillage d'analyse de structure,
dans lequel
la préparation du maillage d'analyse de fluide (S3) et du maillage d'analyse de structure (S5) est réalisée en parallèle,
le mappage de données automatique (S6) est réalisé par interpolation entre le maillage d'analyse de fluide et le maillage d'analyse de structure,
le procédé comprend en outre l'étape de préparer simultanément des données de conductivité thermique et de température de surface de paroi adaptées au maillage d'analyse de structure,
ledit maillage d'analyse de fluide et ledit maillage d'analyse de structure sont préparés par une division automatique par maillage quadruple en vue d'une division en cellules tétraédriques, et
ladite division automatique par maillage quadruple est réalisée par un algorithme de génération automatique de réseau d'une technique quelconque parmi une technique d'arbre octal, une technique de triangulation de Delaunay et une technique de front avançant.
